(19) Europäisches Patentamt
European Patent Office
Office européen des brevets

(11) **EP 3 507 623 B1**

(12) **FASCICULE DE BREVET EUROPEEN**

(45) Date de publication et mention
de la délivrance du brevet:
**10.03.2021 Bulletin 2021/10**

(21) Numéro de dépôt: **17758174.1**

(22) Date de dépôt: **30.08.2017**

(51) Int Cl.:
*G01V 1/18* *(2006.01)*          *G01H 9/00* *(2006.01)*

(86) Numéro de dépôt international:
**PCT/EP2017/071694**

(87) Numéro de publication internationale:
**WO 2018/041855 (08.03.2018 Gazette 2018/10)**

(54) **HYDROPHONE À FIBRE OPTIQUE OPTIMISÉ**

HYDROPHON MIT OPTIMIERTER OPTISCHER FASER

HYDROPHONE WITH OPTIMISED OPTICAL FIBRE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **01.09.2016 FR 1601291**

(43) Date de publication de la demande:
**10.07.2019 Bulletin 2019/28**

(73) Titulaire: **Thales**
**92400 Courbevoie (FR)**

(72) Inventeurs:
• **LAUNAY, François-Xavier**
**06903 Sophia-Antipolis (FR)**
• **LARDAT, Raphaël**
**06903 Sophia-Antipolis (FR)**

(74) Mandataire: **Marks & Clerk France**
**Immeuble "Visium"**
**22, avenue Aristide Briand**
**94117 Arcueil Cedex (FR)**

(56) Documents cités:
**US-A- 4 530 078          US-A1- 2014 036 635
US-A1- 2016 187 515**

• **Anonymus: "Expancel Microspheres an
Introduction", , 12 mai 2014 (2014-05-12), pages
1-14, XP055358356, Extrait de l'Internet:
URL:http://www.boud.com/sites/default/file
s/u27/boud_minerals_-_introduction_to_expa
ncel_thermoplastic_microspheres.pdf [extrait le
2017-03-23]**

EP 3 507 623 B1

## Description

### Domaine de l'invention

L'invention concerne de manière générale les systèmes de mesure de pression acoustique, et en particulier les capteurs acoustiques à fibre optique et les procédés de fabrication de tels capteurs acoustiques.

### Art antérieur

La détection des ondes acoustiques sous-marine est un enjeu majeur pour la surveillance en milieu sous-marin (surveillance de l'activité sismique sous-marine, détection du bruit environnemental, détection de sous-marins, de navires, de plongeurs, etc.).

Les capteurs à fibres optiques ont permis des avancées majeures en matière de détection d'onde acoustiques sous-marines. Ainsi, les capteurs acoustiques à fibre optique, tels que les hydrophones optiques, sont utilisés en milieu sous-marin pour détecter des variations de pressions acoustiques induites par des phénomènes extérieurs. Les capteurs acoustiques à fibre optique présentent de nombreux avantages par rapport aux capteurs piézoélectriques conventionnels.

Un capteur acoustique à fibre optique comprend au moins une fibre optique dont les caractéristiques optiques sont sensibles à la pression acoustique à mesurer. Lorsque de la lumière est injectée dans la fibre optique, un signal lumineux dont les caractéristiques dépendent de la pression acoustique est généré par l'hydrophone. Certains capteurs acoustiques à fibres optiques utilisent des réseaux de Bragg inscrits dans la fibre. Un réseau de Bragg est un réflecteur comprenant des couches alternées d'indices de réfraction différents, ce qui provoque une variation périodique de l'indice de réfraction effectif dans la fibre optique. Les capteurs acoustiques optiques à réseau de Bragg sont utilisés pour mesurer la pression acoustique qui correspond à une contrainte appliquée au capteur, qui induit une variation de longueur d'onde.

Les capteurs acoustique à fibres optiques à réseaux de Bragg peuvent être passifs ou actifs (capteur à laser à fibre optique CLFO).

Un capteur acoustique à fibre optique à réseaux de Bragg CLFO comprend une enveloppe de protection, traversée de part et d'autre par au moins une fibre optique. L'enveloppe délimite une cavité amplificatrice dans laquelle est injecté un fluide. L'hydrophone optique est adapté pour recevoir la lumière injectée dans la fibre optique (provenant généralement d'une diode luminescente) et pour fournir un signal de mesure indiquant la pression acoustique incidente.

Cependant, une CLFO présente une sensibilité insuffisante pour la détection de faibles variations de pression.

Pour améliorer la sensibilité des capteurs acoustiques à fibre optique, une solution consiste à amplifier les faibles variations de pression, en prévoyant une enveloppe particulière autour de la fibre (e.g. gaine amplificatrice, cavité résonante etc.) qui permet d'appliquer une contrainte mécanique amplifiée sur la fibre optique. Cependant, cette technologie ne permet pas toujours d'atteindre les sensibilités requises pour la détection de petites variations de pression acoustique et impose des configurations d'enveloppe assez complexe pouvant impacter le fonctionnement de la fibre optique. Par ailleurs, lorsqu'une sensibilité satisfaisante à la pression acoustique est atteinte, la tenue en immersion est souvent sacrifiée.

Plus généralement, les capteurs acoustiques à fibre optique existants peuvent être configurés :

- soit pour optimiser la sensibilité du capteur aux variations de la pression pour un encombrement donné (sensibilité élevée) en sacrifiant l'immersion maximale de fonctionnement (l'hydrophone acoustique n'est alors fonctionnel que jusqu'à quelques mètres d'immersion, typiquement pour une pression inférieure à 0.1 MPa (1 bar)) ;
- soit pour conserver une très bonne tenue à l'immersion compatible des applications sous-marines (typiquement jusqu'à plus de 100 MPa (1000 bar)), mais au détriment de la sensibilité

Un document de l'art antérieur est US 4 530 078 A, qui divulgue un capteur acoustique à fibre microcourbée comprenant deux pistons opposés soumis à une onde de pression.

Cependant, il n'existe pas de configuration de capteur acoustique optique permettant de satisfaire à la fois la contrainte de sensibilité et la contrainte de tenue à l'immersion, de manière contrôlée.

### Définition générale de l'invention

L'invention vient améliorer la situation. A cet effet, il est proposé un dispositif de capteur acoustique à fibre optique selon la revendication 1.

Les microballons peuvent comprendre des microballons de tailles différentes.

Les microballons peuvent comprendre des microballons incluant différents types de gaz.

Le fluide à base de liquide peut être constitué d'un mélange de fluides de différents types.

En variante, le fluide à base de liquide peut être un liquide.

Dans un mode de réalisation, le fluide à base de liquide peut comprendre une huile.

Dans un autre mode de réalisation, le fluide à base de liquide peut être un gel.

Dans l'invention, la compressibilité maximale du fluide mixte pour une immersion maximale cible du dispositif est une fonction du volume total de fluide mixte à l'intérieur de l'enveloppe, du volume de fluide mixte contenu dans l'enveloppe et à l'extérieur de la cavité, et de la pression à ladite immersion maximale cible.

En particulier, la compressibilité maximale $\chi_{max}$ du fluide mixte peut être donnée par :

$$\chi_{max} = \frac{V_{ext}}{V_{tot}} \frac{1}{P_{max}}$$

où $V_{tot}$ désigne le volume total de fluide mixte à l'intérieur de l'enveloppe, $V_{ext}$ désigne le volume de fluide mixte contenu dans l'enveloppe à l'extérieur de la cavité et $P_{max}$ désigne la pression à ladite immersion maximale cible.

L'invention propose en outre un procédé de fabrication d'un capteur acoustique à fibre optique selon la revendication 10.

Les modes de réalisation de l'invention permettent ainsi d'optimiser la sensibilité du capteur pour un encombrement donné tout en conservant une tenue à l'immersion compatible avec les applications sous-marines, sans qu'il soit nécessaire de modifier la structure générale du capteur acoustique à fibre optique. L'invention offre ainsi une solution applicable à tout type d'hydrophone à fibre optique, quel que soit l'agencement de ces éléments. En outre, elle permet d'atteindre une sensibilité et une tenue en immersion cibles en ajustant le taux de microballons injectés dans la cavité du capteur acoustique optique.

## Description des figures

D'autres caractéristiques et avantages de l'invention apparaîtront à l'aide de la description qui suit et des figures des dessins annexés dans lesquels:

- La figure 1 est un schéma représentant un dispositif de capteur à fibre optique ;
- La figure 2 est un organigramme représentant le procédé de fabrication d'un dispositif de capteur à fibre optique selon un mode de réalisation de l'invention ; et
- La figure 3 est un diagramme représentant l'évolution de la sensibilité et de la tenue en immersion d'un hydrophone optique en fonction du taux de microballons dans la cavité.

Les dessins et les annexes à la description pourront non seulement servir à mieux faire comprendre la description, mais aussi contribuer à la définition de l'invention, le cas échéant.

## Description détaillée

Les modes de réalisation de l'invention proposent un capteur acoustique à fibre optique permettant d'optimiser simultanément et de manière contrôlée la sensibilité et la tenue en immersion du capteur, quelque soit l'application de l'invention.

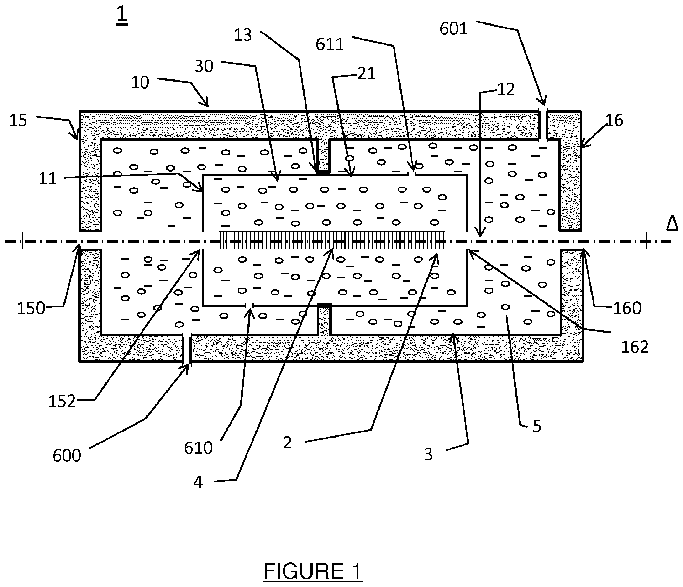

La figure 1 représente un capteur acoustique à fibre optique 1 (encore appelé ci-après « hydrophone optique » ou « capteur acoustique optique »), selon certains modes de réalisation de l'invention, pour détecter des variations de pression acoustique dans le milieu où est immergé l'hydrophone.

L'hydrophone à fibre optique 1 comprend une enveloppe 10 délimitant une cavité 3 et au moins un capteur à fibre optique 2 logé dans la cavité 3.

L'hydrophone à fibre optique 2 comprend une fibre optique 12 et un dispositif de maintien 11 solidaire de la fibre optique 12. Dans certains modes de réalisation, plusieurs hydrophones 1 peuvent être multiplexés sur une même fibre 12.

Le dispositif de maintien 11 est traversé par la fibre optique. Le dispositif de maintien 11 est fixé à celle-ci au niveau de points de fixation 13 prévus sur ledit dispositif de maintien. Le dispositif de maintien 11 est configuré pour maintenir la fibre en position dans la cavité 3. Il peut en outre comprendre des éléments additionnels pour l'amplification mécanique dans certaines applications acoustiques par exemple.

La fibre optique 12 peut comprendre au moins un réseau de Bragg 4 inscrit sur la fibre et configuré pour émettre des longueurs d'onde sensibles à la contrainte mécanique appliquée sur la fibre optique 12. La mesure de ces variations de longueurs d'onde permet de déduire la contrainte appliquée sur la fibre optique 12 et par suite de mesurer la pression acoustique, en utilisant un coffret d'interrogation.

L'homme du métier comprendra que l'invention n'est pas limitée à une fibre optique 12 comprenant un réseau de Bragg inscrit et peut s'appliquer à d'autres types de fibres optiques, comme par exemple une fibre bobinée ou une fibre de type CLFO (Capteur Laser à Fibre Optique) munie d'un réseau de Bragg.

Le dispositif de maintien 11 a pour fonction d'amplifier la déformation axiale imposée à l'élément de fibre optique 12 par la pression dynamique exercée par le milieu extérieur.

Le capteur optique 2 constitue la partie sensible de l'hydrophone et remplit classiquement les fonctions suivantes:

- une fonction de capteur de pression exploitant la variation de fréquence d'émission de la cavité laser associée à une déformation élastique axiale, en étirement et/ou en rétraction;

- une fonction de transmission du signal lumineux portant la mesure;

- une fonction de multiplexage mise en œuvre à partir de la sélectivité en longueur d'onde donnée par le réseau de Bragg.

L'enveloppe 10 peut être configurée pour protéger mécaniquement l'hydrophone 1, notamment contre les chocs, contre certains efforts dus à l'environnement, etc. L'enveloppe 10 peut par exemple se présenter sous la forme d'un corps rigide tel qu'un tube cylindrique dont la droite génératrice coïncide sensiblement avec l'axe général de la fibre optique 12. L'enveloppe peut être formée de plusieurs éléments assemblés entre eux ou avoir une structure monobloc.

La fibre optique 12 peut être fixée à l'enveloppe 10 au niveau des ouvertures de passage 150 et 160 par tout moyen de raccord rigide comme par exemple par soudure (e.g. soudure laser) ou collage (e.g. collage par revêtement polyamide ou par colle Epoxy).

En complément, le dispositif de maintien 11 du capteur 2 est fixé à l'enveloppe 10 au niveau de points de raccord 13.

Selon l'invention, la cavité 3 délimitée par l'enveloppe 10 est remplie d'un fluide mixte 5 comprenant un fluide à base de liquide et un taux choisi de microballons, chaque microballon étant une bulle micronique ou sub-micronique remplie de gaz.

La proportion de microballons (taux de microballons) par rapport au volume de liquide dans le fluide mixte injecté dans la cavité 3 est calculée de manière à atteindre une compressibilité de fluide mixte cible. La compressibilité de fluide mixte cible (compressibilité de fluide mixte dans la cavité 3) peut être prédéfinie ou choisie en fonction de l'application dans laquelle est utilisé l'hydrophone. La sensibilité et la tenue en immersion d'un hydrophone à fibre optique étant directement liées à la compressibilité du fluide utilisé, la proportion de microballon injectée dans la cavité par rapport au volume de liquide permet d'atteindre à la fois une sensibilité et une tenue en immersion cibles, sans avoir à sacrifier l'une ou l'autre de ces deux contraintes. Par exemple, si le taux de microballons injecté dans la cavité est calculé de manière à atteindre une compressibilité cible élevée, l'hydrophone sera plus sensible mais sa tenue en immersion sera moins grande car la cavité fluide présente un volume limité par l'encombrement de l'enveloppe 10.

La composition du fluide mixte 5 injecté dans la cavité 3 peut être ainsi optimisée afin d'améliorer la sensibilité de l'hydrophone en fonction de l'immersion souhaitée et de l'encombrement défini par la cavité, quelque soit la configuration de l'hydrophone.

L'utilisation de microballons permet de contrôler la proportion de gaz dans le fluide et d'atteindre ainsi un niveau de compressibilité de fluide cible correspondant à la sensibilité/tenue en immersion souhaitées.

Dans un mode de réalisation, le fluide à base de liquide contenu dans le fluide mixte peut être de l'huile. Le fluide mixte injecté dans la cavité est alors une huile mélangée à des microballons, le taux de microballons intégré dans l'huile étant choisi pour atteindre une compressibilité cible de fluide mixte.

Plus généralement, le fluide à base de liquide qui est injecté dans la cavité peut être tout type de fluide, visqueux, partiellement visqueux ou non visqueux. Le fluide à base de liquide peut notamment être un liquide ou un gel de différents types ou composé de tels liquides et gels. Le fluide à base de liquide injecté dans la cavité peut être lui-même composite et formé de un ou plusieurs types de liquides. Par exemple, le fluide à base de liquide peut être constitué d'eau, et/ou d'huile.

La suite de la description sera faite principalement en référence à un fluide à base de liquide de type liquide, tel que par exemple une huile, à titre d'exemple non limitatif.

Les microballons peuvent inclure des microballons ayant la même taille ou les mêmes dimensions. En variante, les microballons peuvent inclure des microballons ayant des tailles ou dimensions différentes.

L'enveloppe 10 est étanche pour isoler le fluide qu'elle contient du milieu extérieur.

L'enveloppe 10 peut comporter au moins un orifice de passage de fluide en un endroit choisi de l'enveloppe, ledit orifice étant configuré pour permettre l'injection de fluide mixte dans la cavité 3 et/ou la sortie d'air contenu initialement dans l'enveloppe avant le remplissage de fluide. Dans le mode de réalisation de la figure 1, deux orifices de passage de fluide 600 et 601 sont utilisés. Les orifices de passage de fluide sont agencés en deux endroits choisis de l'enveloppe. Les orifices comprennent un orifice d'entrée 600 configuré pour permettre l'injection de fluide mixte dans la cavité 3 et un orifice de sortie 601 configuré pour permettre la sortie de l'air contenu initialement dans l'enveloppe 10 avant le remplissage de fluide.

Le dispositif de maintien 11 constitue un corps rigide (par exemple de forme généralement cylindrique, ayant le même axe que l'enveloppe 10) et traversé par la fibre optique au niveau de deux points de fixation 152 et 162. Le dispositif de maintien 11 délimitant une cavité interne 30 dans laquelle est plongée la partie active de la fibre optique. Le dispositif de maintien 11 peut en outre comprendre au moins un orifice de passage secondaire. Dans l'exemple de la figure 1, le dispositif de maintien 11 comprend les deux orifices de passage secondaires suivants :

- un orifice secondaire d'entrée 610 pour permettre l'entrée de fluide mixte de la cavité 3 vers la cavité interne 30,
- un orifice de sortie 611 pour permettre la sortie de l'air contenue initialement dans la cavité interne avant le remplissage de fluide,

Les orifices d'entrées et de sortie 610 et 611 ont également une fonction d'équilibrage de pression : ils mettent en permanence le milieu intérieur contenu dans la cavité interne 30 en contact avec le milieu contenu dans la cavité 3, ce qui permet aux pressions régnant à l'intérieur de la cavité 30 et à l'extérieur de la cavité 30 de s'équilibrer. L'enveloppe du dispositif de maintien 11 est ainsi en communication fluidique avec la cavité 3.

Les dimensions des microballons peuvent être inférieures aux dimensions des ouvertures de passage d'entrée de fluide 600 et 610.

Dans l'invention, le taux de microballons injecté dans la cavité 3 par rapport au volume de liquide injecté est calculé au préalable en fonction de la compressibilité cible $\chi_{cible}$ du fluide mixte (en Pa$^{-1}$ avec Pa désignant l'unité Pascal) et du volume $V_{cavité}$ de la cavité 3 délimitée par l'enveloppe 10. La compressibilité cible du fluide mixte désigne la variation relative de volume de fluide sous l'effet d'une pression appliquée.

Dans l'invention, la compressibilité maximale $\chi_{max}$ qui peut être atteinte est une fonction :

- du volume total de fluide $V_{tot}$ injecté à l'intérieur de l'enveloppe 10 qui correspond à la somme du volume de fluide $V_{int}$ contenu dans la cavité 30 (délimité par le dispositif 11) et du volume de fluide $V_{ext}$ contenu dans l'enveloppe et à l'extérieur de la cavité 30 ($V_{tot} = V_{ext} + V_{int}$) ;
- du volume de fluide $V_{ext}$ contenu dans l'enveloppe mais à l'extérieur de la cavité 30 ; et
- de la pression $P_{max}$ à une immersion maximale cible.

En particulier, la compressibilité maximale $\chi_{max}$ peut être donnée par l'équation (1) suivante :

$$\chi_{max} = \frac{V_{ext}}{V_{tot}} \frac{1}{P_{max}} \qquad (1)$$

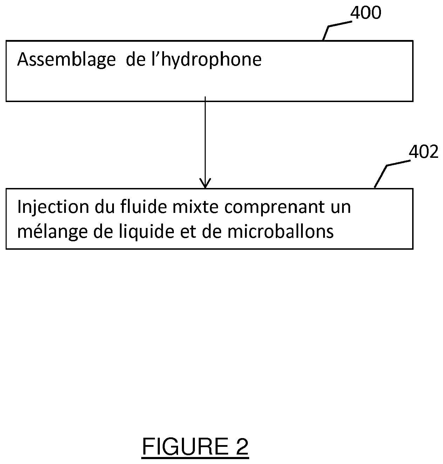

La figure 2 illustre le procédé de fabrication de l'hydrophone à fibre optique 1, selon un mode de réalisation.

A l'étape 400, les éléments de l'hydrophone optique sont assemblés. Dans cette étape, l'enveloppe 10 et le capteur optique 2 sont assemblés. L'hydrophone 1 ainsi assemblé est initialement rempli d'air.

A l'étape 402, le fluide mixte est injecté à travers l'orifice d'entrée 600, ce qui a pour effet :

- de chasser l'air contenu dans la cavité 3 à travers l'orifice de sortie 601 ;
- de faire passer le fluide mixte dans la cavité interne 30 à travers l'orifice d'entrée secondaire 610 tout en chassant l'air de la cavité interne 30 via l'orifice de sortie 611.

Le fluide mixte peut être directement injecté dans l'hydrophone 1, à l'étape 402, sous une forme composite incluant le taux choisi de microballons et le volume de liquide. Dans un tel mode de réalisation, un réservoir contenant le fluide mixte, mélangé selon la proportion calculée ou choisie de microballons par rapport au liquide, peut être raccordé à l'enveloppe au niveau de l'orifice d'entrée 600 pour injecter le fluide mixte.

En variante, le liquide et les microballons peuvent être injectés successivement ou alternativement jusqu'à atteindre le volume de liquide et le taux de microballons choisis.

Le dispositif de capteur à fibre optique 1 ainsi obtenu peut alors être utilisé dans l'environnement de fonctionnement prévu, ce qui garantit d'atteindre la sensibilité et la tenue de pression cibles (correspondant à la compressibilité cible).

Grâce à l'utilisation d'un fluide mixte constitué de proportions de microballons et de liquide optimisées, il est possible de prévoir un hydrophone plus compact. En effet, en injectant un taux choisi de microballons, il est possible d'atteindre une sensibilité cible, ce qui permet de réduire le volume de l'enveloppe.

Par comparaison, dans les hydrophones acoustiques classiques utilisant un liquide pour remplir la cavité du capteur optique, comme de l'eau ou de l'huile, si l'utilisation de liquide dans la cavité permet une très bonne tenue en immersion (jusqu'à plus de 100 MPa (1000 bar)), une faible sensibilité à la pression acoustique est obtenue. Par exemple, pour un hydrophone optique de l'art antérieur acceptant une réduction de volume fluide de 10 %, l'immersion maximale de fonctionnement avec un tel hydrophone rempli d'huile est d'environ 5 000 mètres. Une telle valeur est très supérieure à l'immersion de fonctionnement requise.

Inversement, dans les hydrophones acoustiques classiques utilisant un gaz pour remplir la cavité du capteur optique, une sensibilité élevée est obtenue mais un tel hydrophone classique n'est fonctionnel que jusqu'à quelques mètres d'immersion (pression inférieure à 0.1 MPa (1 bar)).

Par exemple, pour un hydrophone acceptant une réduction de volume fluide de 10 %, l'immersion maximale de fonctionnement avec un tel hydrophone rempli d'air est d'environ 1 mètre. Une telle valeur est insuffisante pour le besoin sous-marin.

Les différents modes de réalisation proposés permettent ainsi d'ajuster la compressibilité du fluide remplissant la cavité 3 en choisissant la proportion de microballons injectée dans la cavité par rapport au volume de fluide constituant le fluide mixte. Par exemple, un taux de microballons d'environ 10 %, permet d'obtenir une compressibilité 10 fois supérieure et donc une augmentation de la sensibilité de 20 dB par rapport aux approches conventionnelles. La tenue en immersion est alors divisée par 10. Ainsi, dans l'exemple considéré, une tenue en immersion de 500 mètres est obtenue, ce qui est généralement suffisant pour les applications d'hydrophones acoustiques.

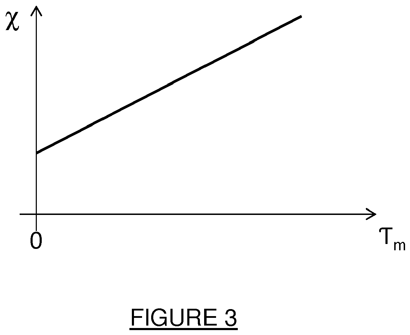

La figure 3 est un diagramme montrant l'évolution de la compressibilité $\chi$ d'un fluide mixte injecté dans un hydrophone optique (représentative de l'évolution de la sensibilité et de la tenue en immersion) en fonction du taux de microballons dans la cavité 3, selon des exemples de réalisation. Comme montré sur la figure 3, la compressibilité du fluide mixte $\chi$ est une fonction linéaire et croissante du taux $T_m$ de microballons injectés dans l'enveloppe.

Les modes de réalisation proposés permettent ainsi d'optimiser la sensibilité du capteur pour un encombrement de cavité 3 donné tout en conservant une tenue à l'immersion compatible avec les applications sous-marines.

L'invention n'est pas limitée aux modes de réalisation décrits ci-avant à titre d'exemple non limitatif. L'invention est définie par les revendications. En particulier, l'invention n'est pas limitée à des configurations particulières d'hydrophones optiques 1. En outre, elle n'est pas limitée à une application particulière de capteur acoustique ni à une forme particulière d'enveloppe 10. Par exemple, l'invention peut être utilisée pour la surveillance de l'activité sismique sous-marine, la détection de sous-marins, de navires, de plongeurs, etc. Par ailleurs, bien que l'invention ait été décrite en relation avec un mode de réalisation où l'enveloppe 10 comprend un unique capteur à fibre 2, elle peut s'appliquer également à une pluralité de capteurs montés en parallèle (l'ensemble de capteurs pouvant être par exemple maintenu par un dispositif de maintien commun 11) ou montés en série. L'invention n'est pas non plus limitée à des techniques particulières de génération de microballons. Les microballons peuvent être constitués de tout type de gaz.

## Revendications

1. Dispositif de capteur acoustique à fibre optique (1), comprenant une enveloppe (10) délimitant une cavité (3) et un capteur à fibre optique (2), ledit capteur à fibre optique comprenant une fibre optique (12) et un dispositif de maintien (11) solidaire de la fibre optique (12), le dispositif de maintien (11) constituant un corps rigide traversé par la fibre optique et fixé à l'enveloppe (10) au niveau de points de raccord (13), l'enveloppe étant traversée par la fibre optique entre deux points, la cavité (3) comprenant un fluide mixte comprenant un fluide à base de liquide et des microballons, **caractérisé en ce que** chaque microballon est une bulle micronique ou sub-micronique remplie de gaz et le taux de microballons dans ladite cavité (3) par rapport au volume de liquide est prédéterminé et fonction de la compressibilité cible du fluide mixte et du volume de la cavité (3) délimitée par l'enveloppe (10), la compressibilité cible étant inférieure à une compressibilité maximale du fluide mixte, la compressibilité maximale du fluide mixte pour une immersion maximale cible du dispositif étant une fonction du volume total de fluide mixte à l'intérieur de l'enveloppe, du volume de fluide mixte contenu dans l'enveloppe et à l'extérieur de la cavité, et de la pression à ladite immersion maximale cible.

2. Dispositif selon la revendication 1, **caractérisé en ce que** les microballons comprennent des microballons de tailles différentes.

3. Dispositif selon l'une des revendications précédentes, **caractérisé en ce que** les microballons comprennent des microballons incluant différents types de gaz.

4. Dispositif selon l'une des revendications précédentes, **caractérisé en ce que** le fluide à base de liquide est constitué d'un mélange de fluides de différents types.

5. Dispositif selon l'une des revendications précédentes, **caractérisé en ce que** le fluide à base de liquide est un liquide.

6. Dispositif selon la revendication 5, **caractérisé en ce que** le fluide à base de liquide comprend une huile.

7. Dispositif selon l'une des revendications précédentes, **caractérisé en ce que** le fluide à base de liquide est un gel.

8. Dispositif selon l'une des revendications précédentes, **caractérisé en ce que** la compressibilité maximale $\chi_{max}$ du fluide mixte est donnée par :

$$\chi_{max} = \frac{V_{ext}}{V_{tot}} \frac{1}{P_{max}}$$

où $V_{tot}$ désigne le volume total de fluide mixte à l'intérieur de l'enveloppe (10), $V_{ext}$ désigne le volume de fluide mixte contenu dans l'enveloppe (10) à l'extérieur de la cavité (11) et $P_{max}$ désigne la pression à ladite immersion maximale cible.

9. Dispositif selon l'une des revendications précédentes, **caractérisé en ce que** la compressibilité du fluide mixte est une fonction linéaire et croissante du taux de microballons injectés dans l'enveloppe.

10. Procédé de fabrication d'un capteur acoustique à fibre optique (1) comprenant une enveloppe (10) délimitant une cavité (3) et un capteur à fibre optique (2), ledit capteur à fibre optique comprenant une fibre optique (12) et un dispositif de maintien (11) solidaire de la fibre optique (12), le dispositif de maintien (11) constituant un corps rigide traversé par la fibre optique et fixé à l'enveloppe (10) au niveau de points de raccord (13), **caractérisé en ce qu'**il comprend les étapes suivantes :

    - assembler l'enveloppe (10) et le capteur à fibre optique (2) de sorte que la fibre optique traverse l'enveloppe en deux points,
    - injecter un mélange de fluide et de microballons dans la cavité, lesdits microballons comprenant des bulles de gaz, chaque microballon étant une bulle micronique ou sub-micronique remplie de gaz, et **en ce que** le procédé comprend un calcul préalable du taux de microballons injecté dans ladite cavité (3) par rapport au volume de liquide injecté en fonction de la compressibilité cible du fluide mixte et du volume de la cavité (3) délimitée par l'enveloppe (10), la compressibilité cible étant inférieure à une compressibilité maximale du fluide mixte, la compressibilité maximale du fluide mixte pour une immersion maximale cible du capteur acoustique étant une fonction du volume total de fluide mixte injecté à l'intérieur de l'enveloppe, du volume de fluide mixte contenu dans l'enveloppe et à l'extérieur de la cavité, et de la pression à ladite immersion maximale cible.

**Patentansprüche**

1. Akustiksensorvorrichtung mit Lichtwellenleiter (1), umfassend eine Hülle (10), welche einen Hohlraum (3) begrenzt und einen Lichtwellenleitersensor (2), wobei der Lichtwellenleitersensor einen Lichtwellenleiter (12) und eine Haltevorrichtung (11) umfasst, welche fest mit dem Lichtwellenleiter (12) verbunden ist, wobei die Haltevorrichtung (11) einen starren Körper bildet, welcher durch den Lichtwellenleiter durchquert wird und an der Hülle (10) auf Höhe von Anschlusspunkten (13) befestigt ist, wobei die Hülle durch den Lichtwellenleiter zwischen zwei Punkten durchquert wird, wobei der Hohlraum (3) ein gemischtes Fluid umfasst, welches ein Fluid umfasst, basierend auf Flüssigkeit und auf Mikrohohlkugeln, **dadurch gekennzeichnet, dass** jede Mikrohohlkugel eine gasgefüllte Blase im Mikrometerbereich oder im Submikrometerbereich ist und die Mikrohohlkugel-Rate in dem Hohlraum (3) im Verhältnis zum Flüssigkeitsvolumen vorbestimmt und von der Zielkomprimierbarkeit des gemischten Fluids und vom Volumen des Hohlraums (3) abhängig ist, welcher durch die Hülle (10) begrenzt wird, wobei die Zielkomprimierbarkeit eine maximale Komprimierbarkeit des gemischten Fluids unterschreitet, wobei die maximale Komprimierbarkeit des gemischten Fluids bei einer maximalen Zieleintauchung der Vorrichtung eine Funktion des Gesamtvolumens des gemischten Fluids im Innern der Hülle, des Volumens des gemischten Fluids, welches in der Hülle und außerhalb des Hohlraums enthalten ist, und des Drucks bei der maximalen Zieleintauchung ist.

2. Vorrichtung nach Anspruch 1, **dadurch gekennzeichnet, dass** die Mikrohohlkugeln Mikrohohlkugeln unterschiedlicher Größen umfassen.

3. Vorrichtung nach einem der vorhergehenden Ansprüche, **dadurch gekennzeichnet, dass** die Mikrohohlkugeln Mikrohohlkugeln umfassen, welche unterschiedliche Gassorten einschließen.

4. Vorrichtung nach einem der vorhergehenden Ansprüche, **dadurch gekennzeichnet, dass** das auf Flüssigkeit basierende Fluid aus einer Mischung aus Fluiden unterschiedlicher Arten gebildet ist.

5. Vorrichtung nach einem der vorhergehenden Ansprüche, **dadurch gekennzeichnet, dass** das auf Flüssigkeit basierende Fluid eine Flüssigkeit ist.

6. Vorrichtung nach Anspruch 5, **dadurch gekennzeichnet, dass** das auf Flüssigkeit basierende Fluid ein Öl umfasst.

7. Vorrichtung nach einem der vorhergehenden Ansprüche, **dadurch gekennzeichnet, dass** das auf Flüssigkeit basierende Fluid ein Gel ist.

8. Vorrichtung nach einem der vorhergehenden Ansprüche, **dadurch gekennzeichnet, dass** die maximale Komprimierbarkeit $\chi_{max}$ des gemischten Fluids sich nach folgender Gleichung richtet:

$$\chi_{max} = \frac{V_{ext}}{V_{tot}} \frac{1}{P_{max}}$$

wobei $V_{tot}$ das Gesamtvolumen des gemischten Fluids innerhalb der Hülle (10) bezeichnet, $V_{ext}$ das Volumen des gemischten Fluids bezeichnet, welches in der Hülle (10) außerhalb des Hohlraums (11) enthalten ist und $P_{max}$ den Druck bei der maximalen Zieleintauchung bezeichnet.

9. Vorrichtung nach einem der vorhergehenden Ansprüche, **dadurch gekennzeichnet, dass** die Komprimierbarkeit des gemischten Fluids eine lineare und ansteigende Funktion der in die Hülle injizierten Rate an Mikrohohlkugeln ist.

10. Verfahren zur Herstellung eines akustischen Sensors mit Lichtwellenleiter (1), umfassend eine Hülle (10), welche einen Hohlraum (3) begrenzt und einen Lichtwellenleitersensor (2), wobei der Lichtwellenleitersensor einen Lichtwellenleiter (12) und eine Haltevorrichtung (11) umfasst, welche fest mit dem Lichtwellenleiter (12) verbunden ist, wobei die Haltevorrichtung (11) einen starren Körper bildet, welcher durch den Lichtwellenleiter durchquert wird und an der Hülle (10) auf Höhe von Anschlusspunkten (13) befestigt ist, **dadurch gekennzeichnet, dass** es folgende Schritte umfasst:

- Montieren der Hülle (10) und des Sensors mit Lichtwellenleiter (2) in einer Weise, dass der Lichtwellenleiter die Hülle an zwei Punkten durchquert,
- Injizieren einer Mischung aus Fluid und Mikrohohlkugeln in den Hohlraum, wobei die Mikrohohlkugeln Gasblasen umfassen, wobei jede Mikrohohlkugel eine mit Gas gefüllte Blase im Mikrometer- oder Submikrometerbereich ist, und dadurch, dass das Verfahren eine vorherige Berechnung der in den Hohlraum (3) injizierten Rate an Mikrohohlkugeln im Verhältnis zu dem injizierten Flüssigkeitsvolumen umfasst, abhängig von der Zielkomprimierbarkeit des gemischten Fluids und des Volumens des Hohlraums (3), welcher durch die Hülle (10) begrenzt wird, wobei die Zielkomprimierbarkeit eine maximale Komprimierbarkeit des gemischten Fluids unterschreitet, wobei die maximale Komprimierbarkeit des gemischten Fluids bei einer maximalen Zieleintauchung des akustischen Sensors von dem in das Innere der Hülle injizierten Gesamtvolumen des gemischten Fluids, vom Volumen des gemischten Fluids, welches in der Hülle und außerhalb des Hohlraums enthalten ist, und von dem Druck bei der maximalen Zieleintauchung abhängig ist.

## Claims

1. A fiber-optic acoustic sensing device (1), comprising a jacket (10) delineating a cavity (3) and a fiber-optic sensor (2), said fiber-optic sensor comprising an optical fiber (12) and a holding device (11) integral with the optical fiber (12), the holding device (11) constituting a rigid body passed through by the optical fiber and fixed to the jacket (10) at connection points (13), the jacket being passed through by the optical fiber between two points, the cavity (3) comprising a mixed fluid comprising a liquid-based fluid and microspheres, **characterized in that** each microsphere is a micron or submicron sphere filled with gas and the rate of microspheres in the cavity (3) relative to the volume of liquid is predetermined and a function of the target compressibility of the mixed fluid and the volume of the cavity (3) delineated by the jacket (10), the target compressibility being less than a maximum compressibility of the mixed fluid, the maximum compressibility of the mixed fluid for a maximum target immersion of the device being a function of the total volume of the mixed fluid inside the jacket, of the volume of mixed fluid contained in the jacket and outside the cavity, and the pressure at said maximum target immersion.

2. The device according to claim 1, **characterized in that** the microspheres comprise microspheres of different sizes.

3. The device according to one of the preceding claims, **characterized in that** the microspheres comprise microspheres including various types of gas.

4. The device according to one of the preceding claims, **characterized in that** the liquid-based fluid consists of a mixture of fluids of various types.

5. The device according to one of the preceding claims, **characterized in that** the liquid-based fluid is a liquid.

6. The device according to claim 5, **characterized in that** the liquid-based fluid comprises an oil.

7. The device according to one of the preceding claims, **characterized in that** the liquid-based fluid is a gel.

8. The device according to one of the preceding claims, **characterized in that** the maximum compressibility $\chi_{max}$ of the mixed fluid is given by:

$$\chi_{max} = \frac{V_{ext}}{V_{tot}} \frac{1}{P_{max}}$$

where $V_{tot}$ is the total volume of mixed fluid in the interior of the jacket (10), $V_{ext}$ is the volume of mixed fluid contained in the jacket (10) outside the cavity (11) and $P_{max}$ is the pressure at said target maximum immersion depth.

9. The device according to one of the preceding claims, **characterized in that** the compressibility of the mixed fluid is a linear and increasing function of the rate of microspheres injected into the jacket.

10. A process for manufacturing a fiber-optic acoustic sensor (1) comprising a jacket (10) delineating a cavity (3) and a fiber-optic sensor (2), said fiber-optic sensor comprising an optical fiber (12), and a holding device (11) integral with the optical fiber (12), the holding device (11) constituting a rigid body passed through the optical fiber and fixed to the jacket (10) at connection points (13) ), **characterized in that** it comprises the following steps:

   - assembling the jacket (10) and the optical fiber sensor (2) so that the optical fiber crosses the jacket at two points,
   - injecting a mixture of fluid and microspheres into the cavity, said microspheres comprising gas bubbles, each microsphere being a micron or submicron bubble filled with gas,
   and **in that** the method comprises a preliminary calculation of the rate of microspheres injected into said cavity (3) relative to the volume of liquid injected as a function of the target compressibility of the mixed fluid and of the volume of the cavity (3) delineated by the jacket (10), the target compressibility being less than a maximum compressibility of the mixed fluid, the maximum compressibility of the mixed fluid for a maximum target immersion of the acoustic sensor being a function of the total volume of mixed fluid injected inside the jacket, the volume of mixed fluid contained in the jacket and outside the cavity, and the pressure at said maximum target immersion.

FIGURE 1

400

| Assemblage de l'hydrophone |
|---|

402

| Injection du fluide mixte comprenant un mélange de liquide et de microballons |
|---|

## FIGURE 2

FIGURE 3

**EP 3 507 623 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4530078 A